# EUROPEAN PATENT APPLICATION

(11) **EP 4 848 835 A1**
(43) Date of publication of application: **02.12.2026**
(21) Application number: 25751221.0
(22) Date of filing: 22.01.2025
(51) Int. Cl.: H04W 52/02

(54) **COMMUNICATION METHOD AND COMMUNICATION APPARATUS**

(30) Priority: 08.02.2024 CN 202410179157
(71) Applicant: Huawei Technologies Co., Ltd., Shenzhen, Guangdong 518129 (CN)
(72) Inventor: XUAN, Yidi, Shenzhen, Guangdong 518129 (CN); LI, Ruijie, Shenzhen, Guangdong 518129 (CN); WANG, Yi, Shenzhen, Guangdong 518129 (CN)
(74) Representative: Gill Jennings & Every LLP
(86) International application number: PCT/CN2025/073822
(87) International publication number: WO 2025/167619

(57) **Abstract**

This application provides a communication method and a communication apparatus. The method includes: receiving first information in a first cell, where the first information is used to request N second cells to send a common signal; and sending the common signal in M second cells in the N second cells, where M and N are positive integers, and M is less than or equal to N. In the method, when one or more second cells are woken up, a network device only needs to receive, in the first cell, one piece of first information sent by a terminal device, thereby reducing energy consumption of the network device.

## Description

This application claims priority to Chinese Patent Application No. 202410179157.9, filed with the China National Intellectual Property Administration on February 8, 2024, and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With gradual evolution of a communication system, a network device may reduce power consumption of the network device by disabling some components (such as a radio frequency channel, an intermediate frequency channel, and a baseband chip). When some components are disabled, the network device cannot send some common signals.

When a terminal device needs to receive these signals that cannot be sent temporarily, the terminal device may request the network device to send these signals in one or more corresponding cells. In other words, one or more cells generated by the network device may be configured to be woken up based on a request. In this case, the cell configured to be woken up based on a request sends a common signal only after the cell receives a wake-up signal. The terminal device may separately send an uplink wake-up signal to each cell that needs to be woken up, so as to receive these common signals. However, in this request manner, the network device may need to receive a large quantity of uplink wake-up signals, resulting in high power consumption of the network device. Therefore, how to design an uplink wake-up request manner to reduce power consumption of the network device when a cell is woken up on demand is an urgent problem to be resolved in the field.

### SUMMARY

This application provides a communication method and a communication apparatus, to reduce power consumption of a network device when a cell is woken up on demand.

According to a first aspect, a communication method is provided. The method is applied to a network device or a communication apparatus that forms a network device. The following uses an example in which the method is applied to the network device for detailed description. The method includes: The network device receives first information in a first cell, where the first information is used to request N second cells to send a common signal; and the network device sends the common signal in M second cells in the N second cells, where M and N are positive integers, and M is less than or equal to N.

In embodiments of this application, the terminal device sends the first information to the network device in the first cell, to request to wake up one or more second cells. In this uplink wake-up request manner, uplink wake-up signals are aggregated into one piece of first information. Compared with a manner in which the uplink wake-up signal is directly sent to each second cell that is configured to send the common signal based on a request, this manner reduces energy consumption of the terminal device. In addition, the network device receives, in the first cell, one piece of first information sent by the terminal device, so as to learn that the terminal device requests to wake up one or more second cells. Compared with a manner in which the network device receives a wake-up signal in each second cell that is configured to send a common signal based on the request, this manner reduces energy consumption of the network device.

With reference to the first aspect, in some implementations of the first aspect, M is equal to N. In this manner, a quantity of second cells that the terminal device requests to wake up is the same as a quantity of second cells that the network device actually sends to wake up. The network device directly wakes up, based on a request of the terminal device, all the second cells that the terminal device requests to wake up. This manner is easy to implement.

With reference to the first aspect, in some implementations of the first aspect, M is less than N. In this manner, a quantity of second cells that a network device actually sends to wake up is less than a quantity of second cells that the terminal device requests to wake up. The network device may send the common signal in some of the N second cells based on a request and an actual transmission status of the terminal device. In this manner, the network device can wake up a cell more flexibly, thereby improving flexibility of the communication system.

With reference to the first aspect, in some implementations of the first aspect, the method further includes: The network device sends second information in the first cell, where the second information is used to indicate a terminal device to receive the common signal in the M second cells.

With reference to the first aspect, in some implementations of the first aspect, the first information is further used to request to activate the N second cells.

In embodiments of this application, the first information sent by the terminal device to the network device is not only used to request the at least one second cell to send the common signal, but also used to request to activate these second cells. The terminal device requests to wake up and activate the second cell based on the first information. The second cell that is woken up and activated may directly perform data transmission with the terminal device, thereby reducing signaling overheads of the communication system and improving efficiency of the communication system.

With reference to the first aspect, in some implementations of the first aspect, the N second cells are N second cells in K second cells, and sending of common signal of the K second cells is configured to be request-based sending.

In embodiments of this application, that sending of the common signal of the K second cells is configured to be request-based sending may also be understood as that the K second cells are woken up based on a request. The terminal device directly selects, from the K second cells that are configured to be woken up based on the request, the N cells to request to wake up based on the first information. Compared with a manner in which the terminal device indicates the N second cells from all the cells, this manner reduces signaling indication overheads of sending the first information by the terminal device. Similarly, for the network device, the network device determines the N second cells from the second cells that are configured to be woken up based on the request. Compared with a manner of determining the N cells from all the cells, this manner may also reduce internal processing work and detection overheads of the first information of the network device.

With reference to the first aspect, in some implementations of the first aspect, the N second cells are N second cells in L second cells, the L second cells are cells that are not woken up in K second cells, and sending of common signal of the K second cells is configured to be request-based sending.

In embodiments of this application, the terminal device directly selects, from the L second cells that are not woken up, the N cells to request to wake up based on the first information. Compared with a manner in which the terminal device indicates the N second cells from all cells or the K second cells that are configured to be woken up based on a request, this manner reduces signaling indication overheads for sending the first information by the terminal device. Similarly, for the network device, the network device determines the N second cells from the second cells that are not woken up. Compared with a manner of determining the N cells from all cells or the K second cells that are configured to be woken up based on a request, this manner can also reduce internal processing work and detection overheads of the first information of the network device.

With reference to the first aspect, in some implementations of the first aspect, the first information is carried in uplink control information UCI.

With reference to the first aspect, in some implementations of the first aspect, before the network device receives the first information, the method further includes: The network device receives a scheduling request in the first cell, where the scheduling request is used to request an uplink resource; and the network device sends indication information in the first cell, where the indication information indicates the uplink resource. That the network device receives the first information includes: The network device receives the first information on the uplink resource.

It should be understood that the method in which the network device receives, before receiving the first information, the scheduling request sent by the terminal device is mainly applied to the terminal device in a connected state.

In embodiments of this application, the terminal device may request, based on the SR, the uplink resource to send the first information. For example, the uplink resource may be a PUSCH resource. In comparison with directly sending the first information by using the PUCCH resource, the PUSCH resource may be used to dynamically adjust a resource length. When the network device configures a large quantity of second cells for the terminal device, and the terminal device requests to wake up only a small part of the second cells based on second information, if the terminal device directly sends the first information by using the PUCCH resource, the resource length is fixed and cannot be adjusted. However, if the terminal device sends the first information based on the SR to request the PUSCH resource, the terminal device may reduce the PUSCH resource length based on an actual quantity of second cells that the terminal device requests to wake up based on the first information, thereby reducing uplink signaling overheads and enabling more flexible system resource scheduling.

With reference to the first aspect, in some implementations of the first aspect, the first information is carried in a medium access control control element MAC CE.

With reference to the first aspect, in some implementations of the first aspect, the common signal includes a synchronization signal block SSB and/or a system information block 1 SIB1.

With reference to the first aspect, in some implementations of the first aspect, for the terminal device in a connected state, the first cell is a primary cell, and the second cell is a secondary cell.

With reference to the first aspect, in some implementations of the first aspect, the N second cells are in a deactivated state.

According to a second aspect, a communication method is provided. The method is applied to a terminal device or a communication apparatus in a terminal device. The following uses an example in which the method is applied to the terminal device for detailed description. The method includes: The terminal device sends first information in a first cell, where the first information is used to request N second cells to send a common signal; and the terminal device receives the common signal in M second cells in the N second cells, where M and N are positive integers, and M is less than or equal to N.

With reference to the second aspect, in some implementations of the second aspect, M is equal to N. In this manner, a quantity of second cells that the terminal device requests to wake up is the same as a quantity of second cells that a network device actually sends to wake up. The network device directly wakes up, based on a request of the terminal device, all the second cells that the terminal device requests to wake up. This manner is easy to implement.

With reference to the second aspect, in some implementations of the second aspect, M is less than N. In this manner, a quantity of second cells that a network device actually sends to wake up is less than a quantity of second cells that the terminal device requests to wake up. The network device may send the common signal in some of the N second cells based on a request and an actual transmission status of the terminal device. In this manner, the network device can wake up a cell more flexibly, thereby improving flexibility of the communication system.

With reference to the second aspect, in some implementations of the second aspect, the method further includes: The terminal device receives second information in the first cell, where the second information is used to indicate the terminal device to receive the common signal in the M second cells.

With reference to the second aspect, in some implementations of the second aspect, the first information is further used to request to activate the N second cells.

With reference to the second aspect, in some implementations of the second aspect, the N second cells are N second cells in K second cells, and sending of common signal of the K second cells is configured to be request-based sending.

With reference to the second aspect, in some implementations of the second aspect, the N second cells are N second cells in L second cells, the L second cells are cells that are not woken up in K second cells, and sending of common signal of the K second cells is configured to be request-based sending.

With reference to the second aspect, in some implementations of the second aspect, the first information is carried in uplink control information UCI.

With reference to the second aspect, in some implementations of the second aspect, before the terminal device sends the first information, the method further includes: The terminal device sends a scheduling request in the first cell, where the scheduling request is used to request an uplink resource; and the terminal device receives indication information in the first cell, where the indication information indicates the uplink resource. That the terminal device sends the first information includes: sending the first information on the uplink resource.

With reference to the second aspect, in some implementations of the second aspect, the first information is carried in a medium access control control element MAC CE.

With reference to the second aspect, in some implementations of the second aspect, the common signal includes a synchronization signal block SSB and/or a system information block 1.

With reference to the second aspect, in some implementations of the second aspect, for the terminal device in a connected state, the first cell is a primary cell, and the second cell is a secondary cell.

With reference to the second aspect, in some implementations of the second aspect, the N second cells are in a deactivated state.

For some possible implementations and beneficial effect of the second aspect, refer to the first aspect. Details are not described herein again.

According to a third aspect, a communication method is provided. The method is applied to a network device or a communication apparatus that forms a network device. The method includes: receiving first information in a first cell, where the first information is used to request to activate N second cells; and sending second information, where the second information is used to indicate a terminal device to activate M second cells in the N second cells.

Specifically, in comparison with the first aspect, in the third aspect and the implementations of the third aspect, the first information is used to request to activate the N second cells, to implement two functions: activation and requesting to send a common signal. When the terminal device has a data transmission requirement, if a secondary cell is in a deactivated state, the terminal device needs to request to activate the secondary cell. The common signal is required in a process of activating the secondary cell. Therefore, the terminal device may directly use signaling for requesting activation to implement two functions: activation and requesting to send the common signal.

With reference to the third aspect, in some implementations of the third aspect, before the second information is sent, the common signal is not sent in the M second cells.

With reference to the third aspect, in some implementations of the third aspect, after the second information is sent, the common signal is sent in the M second cells.

With reference to the third aspect, in some implementations of the third aspect, the common signal includes a synchronization signal block SSB and/or a system information block 1.

With reference to the third aspect, in some implementations of the third aspect, for the terminal device in a connected state, the first cell is a primary cell, and the second cell is a secondary cell.

With reference to the third aspect, in some implementations of the third aspect, the second information is carried in a secondary cell activation/deactivation MAC CE (SCell Activation/Deactivation MAC CE).

According to a fourth aspect, a communication method is provided. The method is applied to a terminal device or a communication apparatus in a terminal device. The method includes: sending first information in a first cell, where the first information is used to request to activate N second cells; and receiving second information, where the second information is used to indicate to activate M second cells in the N second cells. The terminal device activates the M second cells, and receives a common signal in the M second cells, where M and N are positive integers, and M is less than or equal to N.

With reference to the fourth aspect, in some implementations of the fourth aspect, before the second information is received, a common signal is not received in the M second cells.

With reference to the fourth aspect, in some implementations of the fourth aspect, the common signal includes a synchronization signal block SSB and/or a system information block 1.

With reference to the fourth aspect, in some implementations of the fourth aspect, for the terminal device in a connected state, the first cell is a primary cell, and the second cell is a secondary cell.

With reference to the fourth aspect, in some implementations of the fourth aspect, the second information is carried in a secondary cell activation/deactivation MAC CE (SCell Activation/Deactivation MAC CE).

According to a fifth aspect, a communication apparatus is provided. The apparatus includes: a transceiver unit, where the transceiver unit is configured to receive first information in a first cell, and the first information is used to request N second cells to send a common signal. The transceiver unit is further configured to send the common signal in M second cells in the N second cells, where M and N are positive integers, and M is less than or equal to N.

With reference to the fifth aspect, in some implementations of the fifth aspect, the transceiver unit is further configured to send second information in the first cell, where the second information is used to indicate a terminal device to receive the common signal in the M second cells.

With reference to the fifth aspect, in some implementations of the fifth aspect, the first information is further used to request to activate the N second cells.

With reference to the fifth aspect, in some implementations of the fifth aspect, the N second cells are N second cells in K second cells, and sending of common signal of the K second cells is configured to be request-based sending.

With reference to the fifth aspect, in some implementations of the fifth aspect, the N second cells are N second cells in L second cells, the L second cells are cells that are not woken up in K second cells, and sending of common signal of the K second cells is configured to be request-based sending.

With reference to the fifth aspect, in some implementations of the fifth aspect, the first information is carried in uplink control information UCI.

With reference to the fifth aspect, in some implementations of the fifth aspect, the transceiver unit is further configured to receive a scheduling request in the first cell, where the scheduling request is used to request an uplink resource; and the transceiver unit is further configured to send indication information in the first cell, where the indication information indicates the uplink resource. Receiving the first information includes: receiving the first information on the uplink resource.

With reference to the fifth aspect, in some implementations of the fifth aspect, the first information is carried in a medium access control control element MAC CE.

With reference to the fifth aspect, in some implementations of the fifth aspect, the common signal includes a synchronization signal block SSB and/or a system information block 1 SIB1.

With reference to the fifth aspect, in some implementations of the fifth aspect, for the terminal device in a connected state, the first cell is a primary cell, and the second cell is a secondary cell.

With reference to the fifth aspect, in some implementations of the fifth aspect, the N second cells are in a deactivated state.

According to a sixth aspect, a communication apparatus is provided. The apparatus includes: a transceiver unit, where the transceiver unit is configured to send first information in a first cell, and the first information is used to request N second cells to send a common signal. The transceiver unit is further configured to receive the common signal in M second cells in the N second cells, where M and N are positive integers, and M is less than or equal to N.

With reference to the sixth aspect, in some implementations of the sixth aspect, the transceiver unit is further configured to receive second information in the first cell, where the second information is used to indicate a terminal device to receive the common signal in the M second cells.

With reference to the sixth aspect, in some implementations of the sixth aspect, the first information is further used to request to activate the N second cells.

With reference to the sixth aspect, in some implementations of the sixth aspect, the N second cells are N second cells in K second cells, and sending of common signal of the K second cells is configured to be request-based sending.

With reference to the sixth aspect, in some implementations of the sixth aspect, the N second cells are N second cells in L second cells, the L second cells are cells that are not woken up in K second cells, and sending of common signal of the K second cells is configured to be request-based sending.

With reference to the sixth aspect, in some implementations of the sixth aspect, the first information is carried in uplink control information UCI.

With reference to the sixth aspect, in some implementations of the sixth aspect, the transceiver unit is further configured to send a scheduling request in the first cell, where the scheduling request is used to request an uplink resource; and the transceiver unit is further configured to receive indication information in the first cell, where the indication information indicates the uplink resource. Sending the first information includes: sending the first information on the uplink resource.

With reference to the sixth aspect, in some implementations of the sixth aspect, the first information is carried in a medium access control control element MAC CE.

With reference to the sixth aspect, in some implementations of the sixth aspect, the common signal includes a synchronization signal block SSB and/or a system information block 1.

With reference to the sixth aspect, in some implementations of the sixth aspect, for the terminal device in a connected state, the first cell is a primary cell, and the second cell is a secondary cell.

With reference to the sixth aspect, in some implementations of the sixth aspect, the N second cells are in a deactivated state.

According to a seventh aspect, a communication apparatus is provided. The apparatus includes a transceiver unit, where the transceiver unit is configured to receive first information in a first cell, and the first information is used to request to activate N second cells. The transceiver unit is further configured to send second information, where the second information is used to indicate to activate M second cells in the N second cells.

According to an eighth aspect, a communication apparatus is provided. The apparatus includes a transceiver unit, where the transceiver unit is configured to send first information in a first cell, and the first information is used to request to activate N second cells. The transceiver unit is further configured to receive second information, where the second information is used to indicate to activate M second cells in the N second cells. The terminal device activates the M second cells, and receives a common signal in the M second cells, where M and N are positive integers, and M is less than or equal to N.

According to a ninth aspect, this application provides a communication apparatus, including a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

Optionally, the communication apparatus further includes a memory, configured to store a program. The processor is configured to execute a computer program or instructions stored in the memory, to perform the method according to any one of the foregoing aspects or the implementations of the foregoing aspects.

According to a tenth aspect, this application provides a communication system. The system includes a terminal device and a network device.

According to an eleventh aspect, this application provides a communication system. The system includes the communication apparatus according to the third aspect and the communication apparatus according to the fourth aspect.

According to a twelfth aspect, this application provides a computer-readable storage medium. The computer-readable medium stores a computer program or instructions. When the computer program or the instructions are run on a computer, the method according to any one of the foregoing aspects or the implementations of the foregoing aspects is performed.

According to a thirteenth aspect, this application provides a computer program product. The computer program product includes instructions. When the computer program product runs on a computer, the method according to any one of the foregoing aspects or the implementations of the foregoing aspects is performed.

According to a fourteenth aspect, this application provides a chip. The chip includes a processor and a communication interface. The processor reads, through the communication interface, instructions stored in a memory, to perform the method according to any one of the foregoing aspects or the implementations of the foregoing aspects.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the foregoing aspects or the implementations of the foregoing aspects.

The chip may include an input circuit or interface configured to send information or data and an output circuit or interface configured to receive information or data.

According to a fifteenth aspect, a communication method is provided, including: A terminal device sends first information to a network device, where the first information is used to request N second cells to send a common signal; and the network device sends the common signal in M second cells in the N second cells, where M and N are positive integers, and M is less than or equal to N.

For some possible implementations and beneficial effect of the fifteenth aspect, refer to the first aspect or the second aspect. Details are not described again.

### BRIEF DESCRIPTION OF DRAWINGS

FIG. 1 is a schematic diagram of an architecture of a communication system to which an embodiment of this application is applied;
FIG. 2 is a schematic flowchart of a communication method according to an embodiment of this application;
FIG. 3 is a schematic flowchart of another communication method according to an embodiment of this application;
FIG. 4 is a schematic diagram of a MAC CE design according to an embodiment of this application;
FIG. 5 is a schematic diagram of a structure of a communication apparatus according to an embodiment of this application; and
FIG. 6 is a schematic diagram of a communication architecture according to an embodiment of this application.

### DESCRIPTION OF EMBODIMENTS

The following describes technical solutions of this application with reference to accompanying drawings.

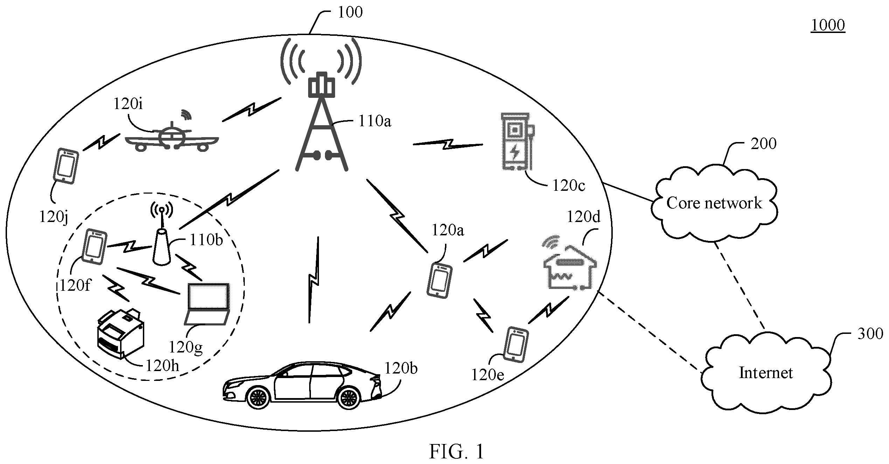

FIG. 1 is a schematic diagram of an architecture of a communication system 1000 to which an embodiment of this application is applied.

As shown in FIG. 1, the communication system includes a radio access network (RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (E-UTRA) system, a new radio (NR) system, or a future radio access system defined in the 3rd generation partnership project (3GPP), or may be a Wi-Fi system. The RAN 100 may further include the foregoing two or more different radio access systems. The RAN 100 may alternatively be an open RAN (O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (TRP), a next generation NodeB (next generation NodeB, gNB) in a 5th generation (5G) mobile communication system, a next generation base station in a 6th generation (6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (CU), a distributed unit (DU), a radio unit (RU), or the like. The CU herein completes functions of a radio resource control protocol layer and a packet data convergence protocol (PDCP) layer of the base station, and may further complete functions of a service data adaptation protocol (SDAP) layer. The DU completes functions of a radio link control layer and a medium access control (MAC) layer of the base station, and may further complete some or a part of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (BBU). The RU may be included in a radio frequency device, for example, included in a remote radio unit (RRU) or an active antenna unit (AAU). The CU may be classified into two types of RAN nodes at a CU-control plane and a CU-user plane.

In different systems, the RAN node may have a different name. For example, in an O-RAN system, a CU may be referred to as an open CU (O-CU), a DU may be referred to as an open DU (O-DU), and an RU may be referred to as an open RU (O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses a base station as an example of the RAN node for description.

The terminal is a device having a wireless transceiver function, and may send a signal to the base station, or receive a signal from the base station. The terminal may alternatively be referred to as a terminal device, user equipment (UE), a mobile station, a mobile terminal, or the like. The terminal may be widely used in various scenarios, for example, a device-to-device (D2D) scenario, a vehicle-to-everything (V2X) communication scenario, a machine-type communication (MTC) scenario, an internet of things (IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertzes (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal.

With the gradual evolution of communication systems, "low carbon" has attracted increasing attention in communication networks. Especially, how to reduce energy consumption of a base station (a network device) has attracted increasing attention. The base station may reduce power consumption of the base station by disabling some components (such as a radio frequency channel, an intermediate frequency channel, and a baseband chip). When some components are disabled, the base station cannot transmit some signals, such as a synchronization signal and physical broadcast channel block (SSB) and/or a system information block 1 (SIB1).

The terminal device sometimes needs to receive some signals that cannot be sent by the network device due to component disabling. For example, before performing initial access, the user needs to receive an SSB and a SIB1. Therefore, during a period in which the base station disables some components, the user cannot receive the SSB and/or the SIB1, and consequently, network access of the user is affected. In this case, the terminal may send an uplink wake-up signal in an on-demand wake-up manner to wake up/trigger/request the base station to send the SSB and/or the SIB1.

It should be understood that, after the base station disables some components, the base station may not send both the SSB and the SIB1, or may still send the SSB but not send the SIB1, or may still send the SIB1 but not send the SSB. Therefore, the uplink wake-up signal sent by the terminal may wake up/trigger/request the base station to send the SSB and/or the SIB1.

On-demand wake-up may be used to wake up other system information. The terminal device sends, in a cell, a Msg1 dedicated to requesting other system information (OSI) to request transmission of the OSI of the cell, and receives a feedback Msg2 in a subsequent random access response window. If the feedback Msg2 is received, it is considered that the OSI has been successfully triggered. Then, the terminal starts to receive the OSI. If the Msg2 is not received or a physical downlink control channel (PDCCH) for scheduling the Msg2 is not detected in the random access response window, it is considered that the OSI is not successfully triggered. In this case, the terminal device resends the Msg1 used to request the OSI.

When the terminal device needs to receive these signals that cannot be sent temporarily, the terminal device may request, in an on-demand wake-up manner, the network device to send these signals. A cell generated by the network device may be configured to be woken up based on a request. In this case, the cell sends a specific signal only when receiving a wake-up signal. The terminal device may separately send an uplink wake-up signal to each cell that needs to be woken up, to receive these specific signals. However, in this request manner, the network device may need to receive a large quantity of uplink wake-up signals, and power consumption of the network device is high. Therefore, how to design an uplink wake-up request manner to reduce power consumption of the network device when a cell is woken up on demand is an urgent problem to be resolved in this field.

In view of the foregoing problem, embodiments of this application provide a communication method and a communication apparatus, to reduce power consumption of the network device when a cell is woken up on demand.

Before specific embodiments are described, some terms that may be used in this application are first explained in detail.

### (1) Common signal

The common signal may also be referred to as common information, or non-dedicated information, or may be understood as information sent by one communication device to a plurality of communication devices. Downlink communication is used as an example. The common information may be understood as information sent by the network device to a plurality of terminals in a cell or a terminal group in a cell, or may be understood as information that is not specifically sent by the network device to a specific terminal or a specific terminal group in a cell, or may be understood as information that can be jointly used by a plurality of terminals in a cell or a terminal group in a cell. For example, the common signal may be system information, a synchronization signal, or a paging message. It should be further understood that, in embodiments of this application, the common signal may be interpreted as a signal used by the terminal to identify a cell, initially access the cell, perform neighboring cell measurement, or perform cell handover. The SSB and/or the SIB1 are/is an example of the common signal. The following provides descriptions of the SSB and the SIB1 to help understand a meaning of the common signal in this application.

Synchronization signal and physical broadcast channel block (synchronization signal and physical broadcast channel block, SSB): The SSB includes a primary synchronization signal (PSS), a secondary synchronization signal (SSS), and a physical broadcast channel (PBCH). The SSB is mainly used for cell search, cell synchronization, cell identity number (CI) carrying, downlink timing, and system message obtaining. The SSB mainly has two functions: (1) cell synchronization and master system information block (master information block, MIB) obtaining; and (2) transmit beam (beam) training for the network device.

Specifically, for the cell synchronization and MIB obtaining, the PSS and the SSS carry a physical cell identifier (PCI), and the terminal obtains the PCI by detecting the PSS and the SSS. Different SSBs in one cell are identified by SSB indexes (indexes), and the SSB index is carried in the PBCH of the SSB. Each SSB index corresponds to a sending position. The terminal completes downlink timing synchronization by detecting the SSB index and a detection moment.

Specifically, for beam training, because a width of a beam for sending an SSB is wider than a width of a beam used by the terminal to perform communication after the terminal establishes a radio resource control (RRC) connection, the transmit beam of the SSB may also be referred to as a wide beam. Sending of the SSB complies with an SSB pattern (pattern), and the SSB pattern includes at least one SSB. Different SSBs in the SSB pattern correspond to different SSB indexes, and different SSB indexes correspond to different time-frequency positions, that is, may correspond to different time domain positions and a same frequency domain position, or may correspond to different frequency domain positions and a same time domain position, or may correspond to different time domain positions and different frequency domain positions. Different SSB indexes correspond to different transmit beams of the network device end. The terminal may select, by detecting the SSB, an SSB index with a strongest received signal, to complete transmit beam training on the network device side. Functions of beam training on the network device side include: (1) The terminal receives, at a time-frequency position corresponding to the strongest SSB index, a SIB1 and a paging message (SIB1/Paging for short) that are sent by the network device by using a same beam, to improve coverage of the SIB1/Paging; (2) the terminal sends a physical random access channel (PRACH) at the position corresponding to the SSB index, and the network device may receive the PRACH by using a same beam, to improve a probability of successfully receiving the PRACH; and (3) after the terminal completes initial access and establishes an RRC connection to the network device, the network device may perform narrow beam training based on the wide beam, that is, perform training only on a narrow beam within a range of the wide beam, thereby reducing overheads of the narrow beam training.

UE obtains a MIB through SSB detection. The MIB indicates a candidate time-frequency position for receiving a PDCCH for scheduling the SIB1. The UE blindly detects the PDCCH at the candidate time-frequency position. If the PDCCH is detected, the UE may receive a physical downlink shared channel (PDSCH) on a time-frequency resource indicated by downlink control information (DCI) in the PDCCH in a specified manner, to obtain the SIB1 carried in the PDSCH. The SIB1 includes a large amount of information, but a main function is to complete a configuration of a primary cell (primary cell, PCell), so that UE in an idle state monitors a paging message; or is to complete uplink timing synchronization through random access, so that the UE is switched to a connected state.

### (2) A cell in which sending of a common signal is configured to be request-based sending

The cell may also be referred to as a cell that is woken up on demand, or referred to as a cell that is woken up based on a request. A cell A is used as an example. That sending of the common signal of the cell A in this application is configured to be request-based sending may be understood as that the cell A does not send the common signal before the terminal device requests to send the common signal of the cell A. Alternatively, it may be understood that the cell A does not send the common signal in a broadcast form before the terminal device requests to send the common signal of the cell A.

### (3) Secondary cell in an activated state and secondary cell in a deactivated state

For a terminal device in a connected state, a plurality of secondary cells (secondary cell, SCell) may be configured. The network device may activate the secondary cell by using activation signaling (for example, a secondary cell activation MAC CE), and the terminal device may perform a normal secondary cell operation (normal SCell operation) in the activated secondary cell (that is, the secondary cell in the active state). For an inactive secondary cell (that is, a secondary cell in a deactivated state), the terminal device does not perform a normal secondary cell operation, including: not sending a sounding reference signal (SRS), not feeding back channel state information (CSI), not sending an uplink shared channel (UL-SCH), not sending a random access channel (RACH), not detecting a physical downlink control channel (PDCCH), and not sending a physical uplink control channel (PUCCH).

The following describes technical solutions of embodiments in this application with reference to accompanying drawings.

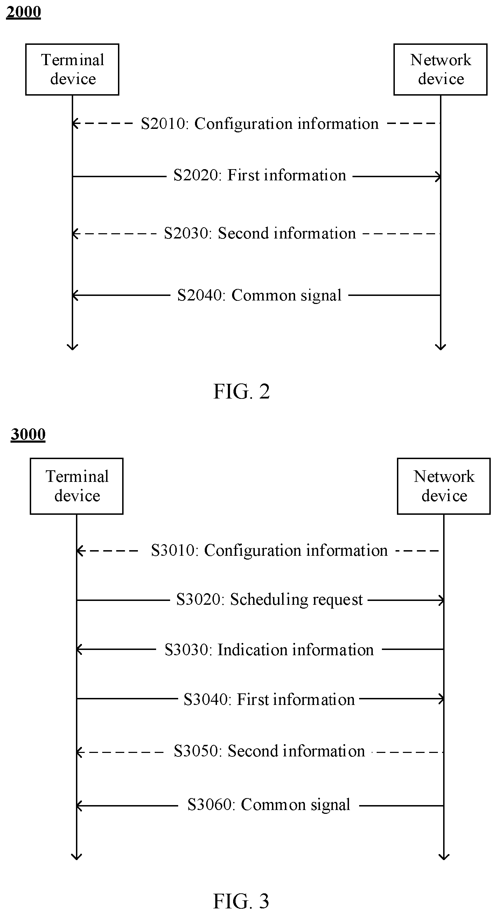

FIG. 2 is a schematic flowchart of a communication method 2000 according to an embodiment of this application.

Refer to FIG. 2. In a possible implementation, the communication method 2000 includes the following steps.

S2010: A network device sends configuration information to a terminal device, and correspondingly, the terminal device receives the configuration information sent by the network device.

Specifically, the configuration information may include a first cell set, and a common signal of a cell included in the first cell set is configured to be sent based on a request. The configuration information may be sent through a first cell connected to the terminal device. That the common signal of the cell included in the first cell set is configured to be sent based on the request may be understood as follows: Before the terminal device requests to send a common signal of a cell in the first cell set, the cell may not send the common signal; or it may be understood that before the terminal device requests to send a common signal of a cell in the first cell set, the cell may not send the common signal in a broadcast manner. Therefore, it may also be understood that the common signal of the cell included in the first cell set is configured not to be sent in a broadcast manner.

It should be understood that S2010 is an optional step, and the configuration information sent by the network device to the terminal device in S2010 may also be pre-negotiated or predefined configuration information. This is not limited in embodiments of this application.

It should be understood that, in this embodiment of this application, the first cell set may include one or more cells. A quantity of cells in the first cell set is not specifically limited in embodiments of this application.

Optionally, the configuration information sent by the network device to the terminal device may indicate, in a form of a physical cell identifier (PCI), information about a cell included in the first cell set.

For example, the configuration information sent by the network device to the terminal device indicates that PCIs of cells included in three first cell sets are respectively 300, 400, and 500.

Optionally, the configuration information sent by the network device to the terminal device may indicate, in a form of a number, information about a cell included in the first cell set.

For example, the configuration information sent by the network device to the terminal device indicates, in a form of a number, that numbers of cells included in the three first cell sets are respectively 1, 2, and 3, and the numbers of the cells may respectively correspond to PCIs, for example, cells included in the first cell sets whose numbers are 1, 2, and 3 respectively correspond to cells whose PCI values are 300, 400, and 500.

It should be understood that the specific PCI value or number value of the cell in this embodiment of this application is merely used as an example for description, and is not intended to limit embodiments of this application.

Still refer to FIG. 2. In a possible implementation, the communication method 2000 is applied to a network device or a communication apparatus that forms the network device, or a terminal device or a communication apparatus in the terminal device. The communication method 2000 further includes the following steps.

S2020: The terminal device sends first information in a first cell, and correspondingly, the network device receives the first information in the first cell, where the first information is used to request N second cells to send a common signal.

It should be understood that, the first information sent by the terminal device to the network device in the first cell may specifically indicate a cell or cells requested by the terminal device to send a common signal, or the first information may indicate that the terminal device needs at least one cell to send a common signal, but the first information does not specifically indicate a requested cell or cells. After receiving the first information, the corresponding network device may enable all surrounding cells to send the common signal. This is not limited in embodiments of this application.

Common signal of the N second cells is configured to be sent based on a request.

Optionally, the N second cells may be N second cells in which the terminal device has a data transmission requirement, or the N second cells may be N second cells with good current signal quality. Alternatively, the terminal device may determine the N second cells in another manner or according to another rule. This is not limited in this application.

In a possible implementation, the terminal device is in a connected state. For the terminal device in the connected state, the first cell is a primary cell (primary cell, PCell), and the second cell is a secondary cell (secondary cell, SCell).

Specifically, the terminal device may send the first information to the network device in the primary cell. Correspondingly, the network device may receive the first information in the primary cell, where the first information is used to request the N secondary cells to send the common signal.

For example, the terminal device is in the connected state, the network device configures three secondary cells whose PCIs are respectively 300, 400, and 500 for the terminal device, and the terminal device sends the first information to the network device through the primary cell, where the first information is used to request the secondary cell corresponding to the PCI=300 to send the common signal.

Further, in a possible implementation, for the terminal device in the connected state, the N secondary cells may be in a deactivated state. That is, if the N secondary cells are in the deactivated state, the terminal sends the first information in the primary cell, where the first information is used to request the N secondary cells to send the common signal. It should be understood that, if the secondary cell in an activated state has already received the common signal (for example, an SSB), the terminal does not need to request the common signal to be sent again. Therefore, the terminal device requests only the secondary cell in an inactive state to send the common signal.

Specifically, in the first information sent by the terminal device to the network device in the primary cell, all the N secondary cells that are requested to be woken up are secondary cells in the deactivated state, that is, the terminal device does not request the secondary cell in the activated state to send the common signal.

For example, the network device configures, for the terminal device, three secondary cells whose PCIs are respectively 300, 400, and 500. The secondary cells whose PCIs are respectively 300 and 400 are in a deactivated state, and the secondary cell whose PCI is 500 is in an activated state. The first information may be used to request the secondary cells/the secondary cell corresponding to PCI=300 and/or PCI=400 to send a common signal.

It should be understood that a status of the terminal device is not limited in embodiments of this application. For example, the terminal device may be in an idle state, an inactive state, or a connected state. When the terminal device is in the connected state, the first cell may represent a primary cell in the following, and the second cell may represent a secondary cell in the following. Details are not described again in this embodiment of this application. When the terminal device is in the idle state or the inactive state, the first cell may be a cell on which the terminal device has camped (camped), and the second cell may be a cell to which the terminal device is selected through cell reselection (cell re-selection); or the first cell may be a cell on which the terminal device has camped (camped), and the second cell is a cell in which the terminal device performs random access. For example, the terminal device may first camp on the first cell, and then determine, in a cell reselection procedure, to reselect the second cell. Then, the terminal device sends, in the first cell, an uplink signal to request the common signal of the second cell, and then determines to camp on the second cell after receiving the common signal of the second cell. For example, the terminal may first camp on the first cell, and then determine, when initiating random access, that random access is to be performed in the second cell. Then, the terminal sends, in the first cell, an uplink signal to request the common signal of the second cell, and then the terminal device accesses the second cell.

In a possible implementation, when the terminal device is in the connected state, the first information is carried in uplink control information (UCI).

Specifically, when the terminal device is in the connected state, the first information may be carried in the UCI, and the first information may be carried in a physical uplink control channel (PUCCH).

Further, before S2020, the terminal device may further receive, through the first cell, a PUCCH resource sent by the network device, where the PUCCH resource is specially used by the terminal device to send the first information, and a format of the PUCCH resource may be a PUCCH format 2/3/4.

In a possible implementation, when the terminal device is in the idle state or the inactive state, the first information is carried on a physical uplink shared channel (PUSCH) used for type 2 random access. In a type 2 random access process, after the terminal completes sending of a physical random access channel (PRACH), the terminal immediately sends a PUSCH. It should be understood that, because an information amount of the first information is large, if the first information is carried on the PRACH, a large quantity of preamble resources need to be occupied. Therefore, for a terminal device in the idle state or the inactive state, a better manner is to carry the first information on the physical uplink shared channel (PUSCH) used for type 2 random access.

In a possible implementation, the common signal includes an SSB and/or a SIB1.

In a possible implementation, that the first information is used to request the N second cells to send the common signal is specifically that the first information includes PCIs of the N second cells that the terminal device requests to wake up.

For example, the first information includes PCI=300 and PCI=500, indicating the terminal device to request two second cells corresponding to PCI=300 and PCI=500 to send the common signal.

In a possible implementation, the N second cells that are requested based on the first information to send the common signal are N second cells in K second cells, and sending of the common signal of the K second cells is configured to be request-based sending. It may be understood that, before the terminal device requests to send a common signal of a second cell in the K second cells, the second cell may not send the common signal. Alternatively, it may be understood that, before the terminal device requests to send a common signal of a second cell in the K second cells, the cell may not broadcast or periodically send the common signal. Therefore, it may also be understood that the common signal of the second cell is configured not to be sent in a broadcast manner. Specifically, the K second cells that send the common signal based on the request may be the first cell set in S2010. The first cell set may include cells that temporarily stop sending the common signal required by the terminal device because some components (such as a radio frequency channel, an intermediate frequency channel, and a baseband chip) are disabled.

For example, in S2010, the network device configures, for the terminal device, K=4 second cells, whose PCIs are respectively 300, 400, 500, and 600, that are configured to send the common signal based on a request, and the first information specifically requests the two second cell whose PCIs are respectively 300 and 400 to send the common signal.

For example, the network device configures, for the terminal device, K=4 second cells, whose PCIs are respectively 300, 400, 500, and 600, that are configured to send the common signal based on a request, and the first information specifically requests all the four second cells whose PCIs are respectively 300, 400, 500, and 600 to send the common signal.

In embodiments of this application, that sending of the common signal of the K second cells is configured to be request-based sending may also be understood as that the K second cells are woken up based on a request. The terminal device directly selects, from the K second cells that are configured to be woken up based on the request, the N cells to request to wake up based on the first information. Compared with a manner in which the terminal device indicates the N second cells from all the cells, this manner reduces signaling indication overheads of sending the first information by the terminal device. Similarly, for the network device, the network device determines the N second cells from the second cells that are configured to be woken up based on the request. Compared with a manner of determining the N cells from all the cells, this manner may also reduce internal processing work and detection overheads of the first information of the network device. In a possible implementation, the first information may include indexes of N second cells in K second cells.

For example, the network device configures K=3 second cells for the terminal device, and indexes of the three second cells are respectively 0, 1, and 2, corresponding to three second cells whose PCIs are respectively 300, 400, and 500. The first information includes two indexes 0 and 2, indicating the terminal device to request the two second cells, whose PCIs are respectively 300 and 500, that correspond to the indexes 0 and 2 in the three second cells to send the common signal.

In a possible implementation, the first information includes a plurality of bits, the plurality of bits are in a one-to-one correspondence with the K second cells, a value of a bit corresponding to the N second cells is a first value, and the first value indicates to request the common signal.

For example, the network device configures K=3 second cells for the terminal device, where PCIs of the three second cells are respectively 300, 400, and 500. A bitmap included in the first information may include three bits, and the three bits respectively correspond to three second cells whose PCIs are respectively 300, 400, and 500. The terminal device requests, based on the first information, the second cell corresponding to the bit whose value is 1 in the bitmap to send the common signal. The bitmap included in the first information is 1 0 1. That is, the terminal device requests two second cells whose PCIs are respectively 300 and 500 to send the common signal.

In a possible implementation, the N second cells that are requested based on the first information to send the common signal are N second cells in L second cells, the L second cells are cells that are not woken up in the K second cells, and sending of the common signal of the K second cells is configured to be request-based sending.

Specifically, the cell that is not woken up may be understood as a cell that does not receive a request for sending a common signal; or may be understood as a cell that does not broadcast/periodically send a common signal.

In a possible implementation, the first information may include indexes of the N second cells in the L second cells that are not woken up in the K cells.

For example, the L=3 cells that are not woken up are included in the K second cells configured by the network device for the terminal device, and indexes of the L=3 second cells that are not woken up are respectively 0, 1, and 2, corresponding to three second cells whose PCIs are respectively 300, 400, and 500. The first information includes two indexes 0 and 2, indicating the terminal device to request the two second cells, whose PCIs are respectively 300 and 500, that correspond to indexes are 0 and 2, in the three second cells that are not woken up to send the common signal.

In a possible implementation, the first information includes a plurality of bits, the plurality of bits are in a one-to-one correspondence with the L second cells that are not woken up in the K cells, a value of a bit corresponding to the N second cells is a first value, and the first value is used to request wakeup.

For example, the L=3 cells that are not woken up are included in the K second cells configured by the network device for the terminal device, and PCIs of the L=3 second cells that are not woken up are respectively 300, 400, and 500. A bitmap included in the first information may include three bits, and the three bits respectively correspond to three second cells whose PCIs are respectively 300, 400, and 500. The terminal device requests, based on the first information, the second cell corresponding to the bit whose value is 1 in the bitmap to send the common signal. The bitmap included in the first information is 1 0 1. That is, the terminal device requests two second cells, whose PCIs are respectively 300 and 500, that are not woken up to send the common signal.

In this embodiment of this application, the terminal device directly selects, from the L second cells that are not woken up, the N cells to request to wake up based on the first information. Compared with a manner in which the terminal device indicates the N second cells from all cells or the K second cells that are configured to be woken up based on a request, this manner reduces signaling indication overheads for sending the first information by the terminal device. Similarly, for the network device, the network device determines the N second cells from the second cells that are not woken up. Compared with a manner of determining the N cells from all cells or the K second cells that are configured to be woken up based on a request, this manner can also reduce internal processing work and detection overheads of the first information of the network device.

Still refer to FIG. 2. In a possible implementation, the communication method 2000 further includes the following steps.

S2030: The network device sends second information in the first cell, and correspondingly, the terminal device receives the second information in the first cell, where the second information is used to indicate the terminal device to receive the common signal in M second cells, or the second information is used to indicate the network device to send the common signal in M second cells.

Specifically, the M second cells may be all or some of the N second cells, and the network device may actually send the common signal in the M second cells.

For example, the terminal device sends the first information to the network device in the first cell, where the first information is used to request, from the network device through the first cell, the three second cells whose PCIs are respectively 300, 400, and 500 to send the common signal. The network device actually sends the common signal in the M=3 second cells. The network device indicates, based on the second information, the terminal device to receive the common signal in the three second cells whose PCIs are respectively 300, 400, and 500.

For example, the terminal device sends the first information to the network device in the first cell, where the first information is used to request, from the network device through the first cell, the three second cells whose PCIs are respectively 300, 400, and 500 to send the common signal. The network device actually sends the common signal in M=2 second cells whose PCIs are respectively 300 and 500 in the three second cells. The network device indicates, based on the second information, the terminal device to receive the common signal in the two second cells whose PCIs are respectively 300 and 500.

Further, the network device may select one or more second cells that receive wake-up requests of more terminal devices in the N second cells to actually send the common signal.

For example, the terminal device sends the first information to the network device in the first cell, where the first information is used to request, from the network device through the first cell, the three second cells whose PCIs are respectively 300, 400, and 500 to send the common signal. The network device receives a wake-up request sent by only one terminal device to the second cell whose PCI is 300 and/or the second cell whose PCI is 400, and the network device receives wake-up requests sent by eight terminal devices to the second cell whose PCI is 500. In this case, the network device actually sends the common signal only in the second cell whose PCI is 500, and indicates, based on the second information, the terminal device that sends the first information to receive the common signal in the second cell whose PCI is 500. In this way, the network device can send the common information in a small quantity of second cells, and a large quantity of terminal devices can receive the common signal, thereby helping further reduce overheads of the network device.

Specifically, the second information may include a PCI of a secondary cell in which the network device actually sends the common signal.

For example, the second information includes PCI=300 and PCI=500, indicating the terminal device to receive the common signal in two cells corresponding to PCI=300 and PCI=500, or indicating the network device to actually send the common signal in the two cells corresponding to PCI=300 and PCI=500.

Specifically, the second information may include indexes of the M second cells in the N second cells.

For example, the first information requests to wake up three second cells, and numbers of the three second cells are respectively 0, 1, and 2, corresponding to three second cells whose PCIs are respectively 300, 400, and 500. The second information includes two numbers 0 and 2, indicating the network device to actually send the common signal in the two second cells, whose PCIs are respectively 300 and 500, that correspond to the numbers 0 and 2 in the three second cells. The terminal device may receive the common signal in the second cells corresponding to the numbers 0 and 2.

Specifically, the second information may include a bitmap, and a plurality of bits included in the bitmap may be in a one-to-one correspondence with the N second cells. The network device notifies, based on the second information, the terminal device that the network device actually sends the common signal in the second cell corresponding to the bit whose value is the first value and that is carried in the bitmap.

For example, the first information indicates three second cells, where PCIs of the three second cells are respectively 300, 400, and 500. A bitmap included in the second information may include three bits, and the three bits respectively correspond to three second cells whose PCIs are respectively 300, 400, and 500. The network device notifies, based on the second information, the terminal device that the second cell corresponding to the bit whose value is 1 in the bitmap actually sends the common signal. The bitmap included in the second information is 1 0 1. That is, the network device actually sends the common signal in the two second cells whose PCIs are respectively 300 and 500. The terminal device may receive the common signal in the second cell corresponding to the PCI=300 or the PCI=500.

It should be understood that S2030 is an optional step. Alternatively, the network device may wake up all the N second cells to send the common signal, so that the network device does not need to send the second information to the terminal device.

In this embodiment of this application, the network device sends the second information to the terminal device, to indicate the second cells in which the terminal device receives the common signal, and actually sends the common signal in the second cells indicated by the second information. The network device indicates, to the terminal device, a cell in which a common signal is actually sent, and may wake up, based on a status of the network device, some cells in the cells that the terminal device requests to wake up. For example, the network device actually wakes up a second cell that receives requests from more terminal devices, so that the network device can wake up the cell more flexibly, thereby improving flexibility of a communication system.

In a possible implementation, for the terminal device in the connected state, the second information is carried in a secondary cell activation/deactivation MAC CE (SCell Activation/Deactivation MAC CE).

Still refer to FIG. 2. In a possible implementation, the communication method 2000 further includes the following steps.

S2040: The network device sends the common signal in the M second cells in the N second cells, and correspondingly, the terminal device receives the common signal in the M second cells in the N second cells, where M and N are positive integers, and M is less than or equal to N.

Specifically, refer to S2030. When the network device selects the M second cells from the N second cells in the first information to actually send the common signal, and indicates, based on the second information, the terminal device to receive the common signal in the M second cells, a quantity of second cells in which the network device actually sends the common signal may be less than a quantity of second cells that the terminal device requests to wake up, that is, M is less than or equal to N.

Specifically, when S2030 is not performed, that is, the network device does not perform selection after receiving the first information, a quantity of second cells in which the network device actually sends the common signal is equal to a quantity of second cells that the terminal device requests to wake up, that is, M is equal to N.

In this embodiment of this application, the terminal device only needs to send one piece of first information to the network device in the first cell, to request to wake up one or more second cells. In this uplink wake-up request manner, uplink wake-up signals are aggregated into one piece of first information. Compared with a manner in which the uplink wake-up signal is directly sent to each second cell that is configured to send the common signal based on a request, this manner reduces energy consumption of the terminal device. In addition, when waking up one or more second cells, the network device only needs to receive one piece of first information sent by the terminal device in the first cell. Compared with a manner of receiving a wake-up signal in each second cell that is configured to send the common signal based on a request, this manner reduces energy consumption of the network device.

FIG. 3 is a schematic flowchart of another communication method 300 according to an embodiment of this application. The communication method 300 is mainly applied to a terminal device in a connected state.

Refer to FIG. 3. In a possible implementation, the communication method 300 includes the following steps.

S3010: A network device sends configuration information to a terminal device, and correspondingly, the terminal device receives the configuration information sent by the network device.

Specifically, the configuration information may include a first cell set, and a common signal of a cell included in the first cell set is configured to be sent based on a request. The configuration information may be sent through a first cell connected to the terminal device. That the common signal of the cell included in the first cell set is configured to be sent based on the request may be understood as follows: Before the terminal device requests to send a common signal of a cell in the first cell set, the cell may not send the common signal; or it may be understood that before the terminal device requests to send a common signal of a cell in the first cell set, the cell may not send the common signal in a broadcast manner. Therefore, it may also be understood that the common signal of the cell included in the first cell set is configured not to be sent in a broadcast manner.

It should be understood that S3010 is an optional step, and the configuration information sent by the network device to the terminal device in S3010 may also be pre-negotiated or predefined configuration information. This is not limited in embodiments of this application.

Still refer to FIG. 3. In a possible implementation, the communication method 300 further includes the following steps.

S3020: The terminal device sends a scheduling request (SR) in a first cell, and correspondingly, the network device receives the scheduling request in the first cell, where the scheduling request is used to request an uplink resource.

Specifically, the terminal device may request a physical uplink shared channel (PUSCH) resource by sending an uplink scheduling request, and the terminal device may send information on the requested uplink resource.

Still refer to FIG. 3. In a possible implementation, the communication method 300 further includes the following steps.

S3030: The network device sends indication information in the first cell, and correspondingly, the terminal device receives the indication information in the first cell, where the indication information indicates an uplink resource.

Specifically, the indication information may be downlink control information (DCI), that is, the network device may send the indication information to the terminal device based on the DCI.

S3040: The terminal device sends first information on the uplink resource indicated by the indication information in the first cell, and correspondingly, the network device receives the first information on the uplink resource indicated by the indication information in the first cell, where the first information is used to request N second cells to send a common signal.

In a possible implementation, the first information is carried in a medium access control control element (medium access control control element, MAC CE).

Specifically, after the terminal device requests and obtains the uplink resource based on the SR, the terminal device may send the first information on the uplink resource requested based on the SR. The uplink resource requested based on the SR may include a PUSCH resource. In this case, the first information may be carried in the MAC CE.

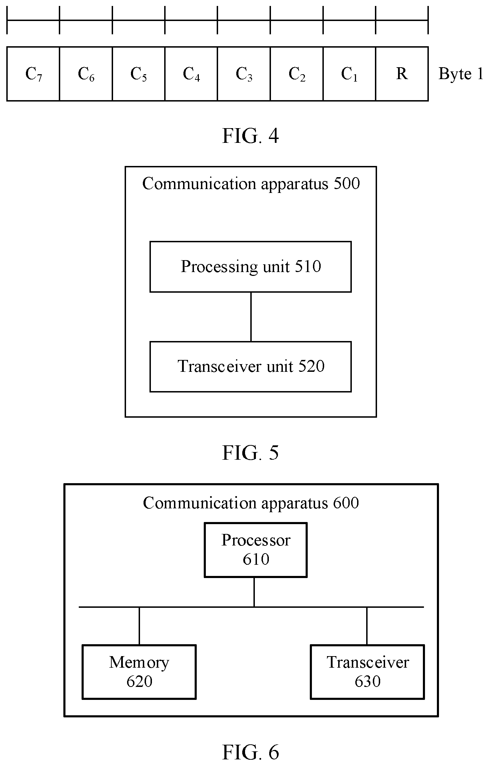

FIG. 4 is a schematic diagram of a MAC CE design according to this embodiment of this application.

Specifically, the first information may be carried in the MAC CE shown in FIG. 4. For example, the first information indicates, in a bitmap manner, N second cells in K second cells or indicates, in a bitmap manner, N second cells in L second cells that are not woken up. The MAC CE includes one byte, and the one byte includes eight bits. The first information carried in the MAC CE by the terminal device may indicate, by using K bits or L bits in the eight bits, a cell that the terminal device requests to wake up.

For example, still refer to FIG. 4. There are five second cells in a non-wake-up state in the second cells configured by the network device for the terminal device. PCIs of these cells are respectively 300, 400, 500, 600, and 700, and correspond to C₇, C₆, C₅, C₄, and C₃ in the MAC CE shown in FIG. 4. The first information requests to wake up two second cells whose PCIs are respectively 400 and 700 to send broadcast signals. In this case, bits C6 and C3 in the MAC CE shown in FIG. 4 are set to 1, and bits C7, C5, and C4 are set to 0.

In this embodiment of this application, the terminal device may request, based on the SR, the uplink resource to send the first information. For example, the uplink resource may be the PUSCH resource. In comparison with directly sending the first information by using the PUCCH resource, the PUSCH resource may be used to dynamically adjust a resource length. When the network device configures a large quantity of second cells for the terminal device, and the terminal device requests to wake up only a small part of the second cells based on second information, if the terminal device directly sends the first information by using the PUCCH resource, the resource length is fixed and cannot be adjusted. However, if the terminal device sends the first information based on the SR to request the PUSCH resource, the terminal device may reduce the PUSCH resource length based on an actual quantity of second cells that the terminal device requests to wake up based on the first information, thereby reducing uplink signaling overheads and enabling more flexible system resource scheduling.

In a possible implementation, the terminal device requests the uplink resource based on the SR, where the SR is an SR specially used to request a first uplink resource, and the first uplink resource is an uplink resource used to carry the first information. For example, the network device may configure two types of SRs, and resources of the two types of SRs are an SR resource 1 and an SR resource 2. The SR resource 1 is an SR resource used to request to transmit an uplink resource for beam failure recovery (BFR) information of a secondary cell, and the SR resource 2 is an SR resource used to request to transmit an uplink resource for the first information. It should be understood that, by preconfiguring SRs having different functions, the network device may determine, based on the received SR, how to parse information carried in a subsequently transmitted PUSCH. For example, if the network device receives the SR resource 2, the network device may determine that the information carried in the subsequently transmitted PUSCH is the first information, and then may parse the information in the parsing manner of the first information.

Optionally, S3050: The network device sends second information to the terminal device in the first cell, and correspondingly, the terminal device receives, in the first cell, the second information sent by the network device, where the second information is used to indicate the terminal device to receive the common signal in M second cells.

S3060: The network device sends the common signal in M second cells in the N second cells, and correspondingly, the terminal device receives the common signal in the M second cells in the N second cells, where M and N are positive integers, and M is less than or equal to N.

It should be understood that embodiments related to the communication method 2000 may also be applicable to the communication method 300. Therefore, examples are not repeatedly described in this embodiment of this application.

In a possible implementation, the first information is further used to request to activate the N second cells.

Specifically, to normally communicate with the terminal device, the second cell not only needs to be woken up to send the common signal, but also needs to be in an activated state. Therefore, the first information may be designed to request to wake up the second cell and request to activate the second cell.

For example, the first information includes two second cells whose PCIs are respectively 300 and 400. After receiving the first information, the network device may wake up the two second cells whose PCIs are respectively 300 and 400, and activate the two second cells whose PCIs are respectively 300 and 400. After being activated, the second cells can be conditionally connected to and communicate with the terminal device.

Specifically, the network device may select, from the N second cells that are requested to be woken up and activated based on the first information, one or more second cells that receive activation requests from more terminal devices to actually send common signals and be activated.

For example, the terminal device sends the first information to the network device in the first cell, and the first information is used to request, from the network device through the first cell, the three second cells whose PCIs are respectively 300, 400, and 500 to send common signals and be activated. The network device receives a wake-up and activation request sent by only one terminal device to the second cell whose PCI is 300 and/or the second cell whose PCI is 400, and the network device receives wake-up and activation requests sent by eight terminal devices to the second cell whose PCI is 500. In this case, the network device actually sends the common signal and activates the second cell whose PCI is 500, and sends the second information to the terminal device, and the second information is used to indicate the terminal device that sends the first information to receive the common signal in the second cell whose PCI is 500.

In this embodiment of this application, the first information sent by the terminal device to the network device is not only used to request the at least one second cell to send the common signal, but also used to request to activate these second cells. The terminal device requests to wake up and activate the second cell based on the first information. The second cell that is woken up and activated may directly perform data transmission with the terminal device, thereby reducing signaling overheads of the communication system and improving efficiency of the communication system.

It should be understood that the first information may also be directly used to request to activate the N second cells, and implicitly request to wake up the N second cells to send a broadcast signal. After receiving the first information used to request to activate the N second cells, the network device may select the M second cells from the N second cells to actually send the broadcast signal and activate the M second cells. The network device may send the second information to the terminal device, and indicate, based on the second information, that the terminal device may receive the broadcast signal in the M second cells.

In a possible implementation, the terminal device sends the first information in the first cell. Correspondingly, the network device receives the first information in the first cell, where the first information is used to request to activate the N second cells. The network device sends the second information, where the second information is used to indicate the terminal device to activate the M second cells in the N second cells. The terminal device activates the M second cells, and receives the common signal in the M second cells, where M and N are positive integers, and M is less than or equal to N.

Specifically, compared with a case in which the terminal device requests, based on the first information, the N second cells to send the common signal, the terminal device requests, based on the first information, to activate the N second cells, to complete two functions: activation and requesting to send the common signal. For the terminal device in the connected state, when the terminal device has a data transmission requirement, if the secondary cell is in a deactivated state, the terminal device needs to request to activate the secondary cell. The common signal is required in a process of activating the secondary cell. Therefore, the terminal device may directly use signaling for requesting activation to implement two functions: activation and requesting to send the common signal.

In a possible implementation, before sending the second information, the network device does not send the common signal in the M second cells; and after sending the second information, the network device sends the common signal.

It should be understood that in embodiments of this application, different embodiments may be combined with each other. For example, for the terminal device in the connected state, the first cell is a primary cell, and the second cell is a secondary cell. After receiving the first information used to request to activate the N second cells, the network device may send the second information carried in the activation/deactivation MAC CE. The common signal sent by the network device after sending the second information may include an SSB and/or an SIB1.

The methods provided in embodiments of this application are described above in detail with reference to FIG. 2 to FIG. 4. Apparatuses provided in embodiments of this application are described below in detail with reference to FIG. 5 and FIG. 6. It should be understood that descriptions of apparatus embodiments correspond to the descriptions of the method embodiments. Therefore, for content that is not described in detail, refer to the foregoing method embodiments. For brevity, details are not described herein again.

The apparatus is configured to implement the foregoing embodiments and related implementations, and details that have been described are not described again. As used in the following, the term "module" may be a combination of software and/or hardware that implement/implements a predetermined function. Although the apparatus described in the following embodiments is implemented by software, implementation of hardware or a combination of software and hardware may also be conceived.

FIG. 5 is a schematic diagram of a structure of a communication apparatus according to an embodiment of this application.

The communication apparatus 500 includes a transceiver unit 510 and a processing unit 520. The transceiver unit 510 may be configured to implement a corresponding communication function, and the processing unit 520 may be configured to perform data processing.

Optionally, the transceiver unit 510 may also be referred to as a communication interface or a communication unit, and includes a sending unit and/or a receiving unit. The transceiver unit 510 may be a transceiver (including a transmitter and/or a receiver), an input/output interface (including an input interface and/or an output interface), a pin, a circuit, or the like. The transceiver unit 510 may be configured to perform the sending and/or receiving steps in the foregoing method embodiments.

Optionally, the processing unit 520 may be a processor (may include one or more processors), a processing circuit with a processor function, or the like, and may be configured to perform a step other than sending and receiving in the foregoing method embodiments.

Optionally, the communication apparatus 500 further includes a storage unit. The storage unit may be a memory, an internal storage unit (for example, a register or a cache), an external storage unit (for example, a read-only memory or a random access memory), or the like. The storage unit is configured to store instructions. The processing unit 520 executes the instructions stored in the storage unit, to enable the communication apparatus to perform the foregoing method.

In a design, the communication apparatus 500 may be configured to perform an action performed by the terminal device in the foregoing method embodiments. For example, the communication apparatus 500 may be configured to perform an action performed by the terminal device in the foregoing method 2000. In this case, the communication apparatus 500 may be a component of the terminal device. The transceiver unit 510 is configured to perform receiving and sending-related operations on the terminal device side in the foregoing method embodiments. The processing unit 520 is configured to perform a processing-related operation of the terminal device in the foregoing method embodiments.

For example, the transceiver unit 510 is configured to send first information in a first cell, where the first information is used to request N second cells to send a common signal.

It should be understood that the transceiver unit 510 may further perform other operations performed by the terminal device in any method in the foregoing method 2000. Details are not described herein again.

In a design, the communication apparatus 500 may be configured to perform an action performed by the network device in the foregoing method embodiments. For example, the communication apparatus 500 may be configured to perform an action performed by the network device in the foregoing method 2000. In this case, the communication apparatus 500 may be a component of the terminal device. The transceiver unit 510 is configured to perform receiving and sending-related operations on the network device side in the foregoing method embodiments. The processing unit 520 is configured to perform a processing-related operation of the network device in the foregoing method embodiments.

For example, the transceiver unit 510 is configured to receive first information in a first cell, where the first information is used to request N second cells to send a common signal.

It should be understood that the transceiver unit 510 and the processing unit 520 may further perform another operation performed by the network device in any one of the foregoing method 2000. Details are not described herein again.

It should be further understood that the communication apparatus 500 herein is embodied in a form of a functional unit. The term "unit" herein may refer to an application-specific integrated circuit (ASIC), an electronic circuit, a processor (for example, a shared processor, a dedicated processor, or a group processor) configured to execute one or more software or firmware programs, a memory, a merged logic circuit, and/or another appropriate assembly that supports the described function. In an optional example, a person skilled in the art may understand that the communication apparatus 500 may be specifically the network device in the foregoing embodiments, and may be configured to perform procedures and/or steps corresponding to the network device in the foregoing method embodiments. To avoid repetition, details are not described herein again.

The communication apparatus 500 in each of the foregoing solutions has a function of implementing a corresponding step performed by the device in the foregoing method, or the communication apparatus 500 in each of the foregoing solutions has a function of implementing a corresponding step performed by the access network device in the foregoing methods. The function may be implemented by hardware, or may be implemented by hardware by executing corresponding software. The hardware or software includes one or more modules corresponding to the foregoing function. For example, a transceiver unit may be replaced with a transceiver machine (for example, a sending unit in the transceiver unit may be replaced with a transmitter, and a receiving unit in the transceiver unit may be replaced with a receiver), and another unit such as a processing unit may be replaced with a processor, to separately perform sending and receiving operations and a related processing operation in the method embodiments.

In addition, the transceiver unit 510 may alternatively be a transceiver circuit (for example, may include a receiver circuit and a sending circuit), and the processing unit may be a processing circuit.

It should be noted that the apparatus in FIG. 5 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 6 is a schematic diagram of a communication architecture according to an embodiment of this application.

The communication apparatus 600 shown in FIG. 6 includes a processor 610, and optionally, one or more of a memory 620 or a transceiver 630. The processor 610 is coupled to the memory 620, and is configured to execute instructions stored in the memory 620, to control the transceiver 630 to send a signal and/or receive a signal.

It should be understood that the processor 610 and the memory 620 may be integrated into one processing apparatus, and the processor 610 is configured to execute program code stored in the memory 620, to implement the foregoing function. During specific implementation, the memory 620 may also be integrated into the processor 610, or independent of the processor 610. It should be understood that the processor 610 may alternatively correspond to each processing unit in the foregoing communication apparatus, and the transceiver 630 may correspond to each receiving unit and each sending unit in the foregoing communication apparatus.

It should be further understood that the transceiver 630 may include a receiver (which is also referred to as a receiver machine) and a transmitter (which is also referred to as a transmitter machine). The transceiver may further include an antenna, and a quantity of antennas may be one or more. The transceiver may alternatively be a communication interface or an interface circuit.

Specifically, the communication apparatus 600 may correspond to the terminal device in the method 2000 according to embodiments of this application. The communication apparatus 600 may perform the step performed by the terminal device in the method 2000. The communication apparatus 600 may correspond to the network device in the method 2000 according to embodiments of this application. The communication apparatus 600 may perform the steps performed by the network device in the method 2000. It should be understood that a specific process of the foregoing corresponding steps is described in detail in the foregoing method embodiments. For brevity, details are not described herein.

When the communication apparatus 600 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory. The processor reads information in the memory, and completes the steps in the foregoing method in combination with hardware of the processor.

This application further provides a computer-readable medium. The computer-readable medium stores a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (DVD), a semiconductor medium (for example, a solid-state disk (SSD), or the like.

In embodiments of this application, the term "example", "for example", or the like is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification are necessarily a same embodiment. In addition, these particular features, structures, or characteristics may be combined in one or more embodiments in any appropriate manner.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." or "at least one type of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that, the terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to descriptions of a corresponding process and beneficial effect in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, or a network device) to perform all or some of the steps in the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a network device or a communication apparatus that forms a network device, comprising:
receiving first information in a first cell, wherein the first information is used to request N second cells to send a common signal; and
sending the common signal in M second cells in the N second cells, wherein M and N are positive integers, and M is less than or equal to N.

2. The method according to claim 1, wherein the method further comprises:
sending second information in the first cell, wherein the second information is used to indicate a terminal device to receive the common signal in the M second cells.

3. The method according to claim 1 or 2, wherein the first information is further used to request to activate the N second cells.

4. The method according to any one of claims 1 to 3, wherein the N second cells are N second cells in K second cells, and sending of common signal of the K second cells is configured to be request-based sending.

5. The method according to any one of claims 1 to 3, wherein the N second cells are N second cells in L second cells, the L second cells are cells that are not woken up in K second cells, and sending of common signal of the K second cells is configured to be request-based sending.

6. The method according to any one of claims 1 to 5, wherein the first information is carried in uplink control information UCI.

7. The method according to any one of claims 1 to 6, wherein before receiving the first information, the method further comprises:
receiving a scheduling request in the first cell, wherein the scheduling request is used to request an uplink resource; and
sending indication information in the first cell, wherein the indication information indicates the uplink resource; and
receiving the first information comprises:
receiving the first information on the uplink resource.

8. The method according to claim 7, wherein the first information is carried in a medium access control control element MAC CE.

9. The method according to any one of claims 1 to 8, wherein the common signal comprises a synchronization signal block SSB and/or a system information block 1 SIB1.

10. The method according to any one of claims 1 to 9, wherein for the terminal device in a connected state, the first cell is a primary cell, and the second cell is a secondary cell.

11. The method according to claim 10, wherein the N second cells are in a deactivated state.

12. A communication method, applied to a terminal device or a communication apparatus in a terminal device, comprising:
sending first information in a first cell, wherein the first information is used to request N second cells to send a common signal; and
receiving the common signal in M second cells in the N second cells, wherein M and N are positive integers, and M is less than or equal to N.

13. The method according to claim 12, wherein the method further comprises:
receiving second information in the first cell, wherein the second information is used to indicate the terminal device to receive the common signal in the M second cells.

14. The method according to claim 12 or 13, wherein the first information is further used to request to activate the N second cells.

15. The method according to any one of claims 12 to 14, wherein the N second cells are N second cells in K second cells, and sending of common signal of the K second cells is configured to be request-based sending.

16. The method according to any one of claims 12 to 14, wherein the N second cells are N second cells in L second cells, the L second cells are cells that are not woken up in K second cells, and sending of common signal of the K second cells is configured to be request-based sending.

17. The method according to any one of claims 12 to 16, wherein the first information is carried in uplink control information UCI.

18. The method according to any one of claims 12 to 17, wherein before sending the first information, the method further comprises:
sending a scheduling request in the first cell, wherein the scheduling request is used to request an uplink resource; and
receiving indication information in the first cell, wherein the indication information indicates the uplink resource; and
sending the first information comprises:
sending the first information on the uplink resource.

19. The method according to claim 18, wherein the first information is carried in a medium access control control element MAC CE.

20. The method according to any one of claims 12 to 19, wherein the common signal comprises a synchronization signal block SSB and/or a system information block 1.

21. The method according to any one of claims 12 to 20, wherein for the terminal device in a connected state, the first cell is a primary cell, and the second cell is a secondary cell.

22. The method according to claim 21, wherein the N second cells are in a deactivated state.

23. A communication method, applied to a network device or a communication apparatus that forms a network device, comprising:
receiving first information in a first cell, wherein the first information is used to request to activate N second cells; and
sending second information, wherein the second information is used to indicate a terminal device to activate M second cells in the N second cells.

24. The method according to claim 23, wherein before sending the second information, the method further comprises:
skipping sending a common signal in the M second cells.

25. The method according to claim 23 or 24, wherein after sending the second information, the method further comprises:
sending the common signal in the M second cells.

26. The method according to claim 24 or 25, wherein the common signal comprises an SSB and/or a SIB1.

27. The method according to any one of claims 23 to 26, wherein for the terminal device in a connected state, the first cell is a primary cell, and the second cell is a secondary cell.

28. The method according to any one of claims 23 to 27, wherein the second information is carried in a secondary cell activation/deactivation MAC CE.

29. A communication method, applied to a terminal device or a communication apparatus in a terminal device, comprising:
sending first information in a first cell, wherein the first information is used to request to activate N second cells;
receiving second information, wherein the second information is used to indicate to activate M second cells in the N second cells; and
activating the M second cells, and receiving a common signal in the M second cells, wherein M and N are positive integers, and M is less than or equal to N.

30. The method according to claim 29, wherein before receiving the second information, the method further comprises:
skipping receiving the common signal in the M second cells.

31. The method according to claim 29 or 30, wherein the common signal comprises an SSB and/or a SIB1.

32. The method according to any one of claims 29 to 31, wherein for the terminal device in a connected state, the first cell is a primary cell, and the second cell is a secondary cell.

33. The method according to any one of claims 29 to 32, wherein the second information is carried in a secondary cell activation/deactivation MAC CE.

34. A communication method, comprising:
sending, by a terminal device, first information to a network device, wherein the first information is used to request N second cells to send a common signal; and
sending, by the network device, the common signal in M second cells in the N second cells, wherein M and N are positive integers, and M is less than or equal to N.

35. A communication apparatus, wherein the communication apparatus is configured to perform the method according to any one of claims 1 to 11, or 12 to 22, or 23 to 28, or 29 to 33.

36. A communication apparatus, wherein the communication apparatus comprises at least one processor, and the at least one processor is configured to execute a computer program or instructions, so that the method according to any one of claims 1 to 11 is performed, or the method according to any one of claims 12 to 22 is performed, or the method according to any one of claims 23 to 28 is performed, or the method according to any one of claims 29 to 33 is performed.

37. The communication apparatus according to claim 36, wherein the communication apparatus further comprises at least one memory, and the at least one memory is configured to store the computer program or the instructions.

38. A computer-readable storage medium, wherein the computer-readable storage medium stores a computer program or instructions, and when the computer program or the instructions are run on a computer, the method according to any one of claims 1 to 11 is performed, or the method according to any one of claims 12 to 22 is performed, or the method according to any one of claims 23 to 28 is performed, or the method according to any one of claims 29 to 33 is performed.

39. A computer program product, wherein when the computer program product runs on a computer, the method according to any one of claims 1 to 11 is performed, or the method according to any one of claims 12 to 22 is performed, or the method according to any one of claims 23 to 28 is performed, or the method according to any one of claims 29 to 33 is performed.

40. A communication system, comprising a network device and a terminal device, wherein the network device is configured to perform the method according to any one of claims 1 to 11 or claims 23 to 28, and the terminal device is configured to perform the method according to any one of claims 12 to 22 or claims 29 to 33.
